# EUROPEAN PATENT APPLICATION

(11) **EP 3 742 118 A1**
(43) Date of publication of application: **25.11.2020**
(21) Application number: 20173589.1
(22) Date of filing: 07.05.2020
(51) Int. Cl.: G01C 21/20, G01C 23/00, G08G 5/00

(54) **SYSTEMS AND METHODS FOR MANAGING A VISION SYSTEM DISPLAY OF AN AIRCRAFT**

(30) Priority: 10.05.2019 US 201916409289
(71) Applicant: Honeywell International Inc., Morris Plains, NJ 07950 (US)
(72) Inventor: BILEK, Jan, Morris Plains, NJ New Jersey 07950 (US); SKAPA, Martin, Morris Plains, NJ New Jersey 07950 (US)
(74) Representative: LKGlobal UK Ltd.

(57) **Abstract**

Systems and methods for managing an overlay of a vision system display on a display associated with a vehicle are provided. The method includes receiving a ground position that indicates a proximity of the vehicle to ground and determining the ground position is below a proximity threshold. The method includes based on the determining the ground position is below the proximity threshold, receiving, an attitude of the vehicle and determining, the attitude is within an attitude threshold. The method includes, based on the determining the attitude is within the attitude threshold, receiving, image data from a camera coupled to the vehicle and determining, based on the image data that the image data is unobscured. The method includes outputting, a disable command to control the display to disable the rendering of the overlay of the vision system display on the display.

## Description

### TECHNICAL FIELD

The present disclosure generally relates to vehicles, such as aircraft, and more particularly relates to systems and methods for managing a vision system display (synthetic vision system display and/or combined vision system display) on a display associated with the aircraft based on one or more conditions associated with the aircraft.

### BACKGROUND

Vehicles, such as aircraft, may employ one or more displays to assist operators in the operation of the aircraft. Generally, these displays may provide information to assist the operator in navigating the aircraft, for example. In certain instances, such as during daylight hours where visibility is substantially uncompromised by weather, for example, the operator may not need to rely on the display to assist in navigating the aircraft as the operator may clearly see out of the window of the aircraft. In other instances, due to cloud cover, weather, night time conditions, etc., the operator may need to rely on the displayed information to assist in navigating the aircraft. The management of the display to provide the information to assist in navigating the aircraft may undesirably increase the operator's workload.

Accordingly, it is desirable to provide improved systems and methods for managing a synthetic vision system display and/or combined vision system display on a display of a vehicle, such as an aircraft, in which an overlay of the synthetic vision system display and/or combined vision system display is managed based on one or more conditions associated with the vehicle to reduce operator workload. Furthermore, other desirable features and characteristics of the present invention will become apparent from the subsequent detailed description and the appended claims, taken in conjunction with the accompanying drawings and the foregoing technical field and background.

### SUMMARY

According to various embodiments, provided is a method for managing an overlay of a vision system display on a display associated with a vehicle. The method includes receiving, by a processor, a ground position of the vehicle that indicates a proximity of the vehicle to ground and determining, by the processor, the ground position of the vehicle is below a proximity threshold. The method includes based on the determining the ground position of the vehicle is below the proximity threshold, receiving, by the processor, an attitude of the vehicle and determining, by the processor, the attitude of the vehicle is within an attitude threshold. The method includes, based on the determining the attitude of the vehicle is within the attitude threshold, receiving, by the processor, image data from a camera coupled to the vehicle and determining, by the processor, based on the image data that the image data is unobscured. The method includes outputting, by the processor, a disable command to control the display to disable the rendering of the overlay of the vision system display on the display.

Based on the determining the attitude of the vehicle is below the attitude threshold, the method further includes: receiving, by the processor, weather data associated with an environment of the vehicle; receiving, by the processor, an amount of ambient light observed in an environment external to the vehicle; and determining, by the processor, based on the weather data and the amount of ambient light to enable the display of the overlay of the vision system display on the display. The receiving, by the processor, the image data from the camera coupled to the vehicle is based on the determining, based on the weather data and the amount of ambient light, to enable the display of the overlay. The method further includes: determining, by the processor, based on the weather data and the amount of ambient light, to disable the display of the overlay of the vision system display on the display; and outputting, by the processor, the disable command.

Based on the determining the attitude of the vehicle is within the attitude threshold, the method further includes: receiving, by the processor, infrared image data from an infrared camera coupled to the vehicle; receiving, by the processor, a position of the vehicle; retrieving, by the processor, at least one object expected in the infrared image data from a datastore associated with the vehicle based on the position of the vehicle; determining, based on the infrared image data and the at least one object, that the infrared image data contains the at least one object; and determining, by the processor, based on the infrared image data containing the at least one object, to enable the display of the overlay of the vision system display on the display. The receiving, by the processor, the image data from the camera coupled to the vehicle is based on the determining, based on the infrared image data containing the at least one object, to enable the display of the overlay. The method further includes: prior to the receiving, by the processor, the ground position of the vehicle, determining, by the processor, an elapsed time exceeds a time threshold. The receiving, by the processor, the image data from the camera coupled to the vehicle further includes: determining, by the processor, based on the image data, that the image data is at least partially obscured; and outputting, by the processor, an enable command to control the display to render the overlay of the vision system display on the display. The method, further includes: determining, by the processor, the ground position of the vehicle is greater than the proximity threshold; and based on the determining the ground position is greater than the proximity threshold, outputting, by the processor, the disable command. The method further includes: determining, by the processor, the attitude of the vehicle is outside of the attitude threshold; and based on the determining the attitude is outside of the attitude threshold, outputting, by the processor, the disable command.

Also provided according to various embodiment is a system for managing an overlay of a vision system display on a display associated with a vehicle. The system includes at least one source of a ground position of the vehicle that indicates a proximity of the vehicle to ground and an attitude of the vehicle and a camera coupled to the vehicle that captures image data of an environment associated with the vehicle. The system includes the display and a controller in communication with the display, the at least one source and the camera. The controller has a processor configured to: receive the ground position of the vehicle, the attitude of the vehicle and the image data; determine, based on the ground position of the vehicle, that the ground position of the vehicle is below a proximity threshold; based on the determination that the ground position is within the proximity threshold, determine, based on the attitude of the vehicle, the attitude of the vehicle is within an attitude threshold; determine that the image data is unobscured; and based on the determination that the image data is unobscured, output a disable command to control the display to disable the rendering of the overlay of the vision system display on the display.

The system further includes at least one second source of weather data associated with an environment of the vehicle; a light sensor that observes an amount of ambient light in an environment external to the vehicle and generates sensor signals based thereon; and wherein the controller is configured to determine, based on the weather data and the sensor signals, to output the disable command. The system further includes an infrared camera coupled to the vehicle, and wherein the processor of the controller is configured to: receive infrared image data from the infrared camera; receive a position of the vehicle from a navigation system associated with the vehicle; retrieve at least one object expected in the infrared image data from a datastore associated with the vehicle based on the position of the vehicle; determine, based on the infrared image data and the at least one object, that the infrared image data contains the at least one object; and determine, based on the infrared image data containing the at least one object, to enable the display to render the display of the overlay of the vision system display on the display. The processor of the controller is further configured to: determine based on the image data, that the image data is at least partially obscured; and based on the determination that the image data is at least partially obscured, output an enable command to control the display to render the overlay of the vision system display on the display. The processor of the controller is further configured to: determine that the ground position of the vehicle is greater than the proximity threshold; and based on the determination that the ground position is greater than the proximity threshold, output the disable command. The processor of the controller is further configured to: determine that the attitude of the vehicle is outside of the attitude threshold; and based on the determination that the attitude is outside of the attitude threshold, output the disable command. The display is a head up display, and the overlay includes translucent synthetic vision images or the translucent synthetic vision images and translucent enhanced flight vision images.

Further provided according to various embodiments is a computer program product for processing a digital signal that includes a tangible storage medium readable by a processing circuit and storing instructions for execution by the processing circuit for performing a method for managing an overlay of a vision system display on a display associated with a vehicle. The method includes receiving a ground position of the vehicle that indicates a proximity of the vehicle to ground and determining the ground position of the vehicle is below a proximity threshold. The method includes based on the determining the ground position of the vehicle is below the proximity threshold, receiving an attitude of the vehicle and determining the attitude of the vehicle is within an attitude threshold. The method includes based on the determining the attitude of the vehicle is within the attitude threshold, receiving infrared image data from an infrared camera coupled to the vehicle and receiving a position of the vehicle from a navigation system associated with the vehicle. The method includes retrieving at least one object expected in the infrared image data from a datastore associated with the vehicle based on the position of the vehicle and determining, based on the infrared image data and the at least one object, that the infrared image data contains the at least one object. The method includes based on the determining the infrared image data contains the at least one object, receiving, image data from a camera coupled to the vehicle and determining based on the image data that the image data is unobscured. The method includes outputting a disable command to control the display to disable the rendering of the overlay of the vision system display on the display.

The computer program product further includes receiving weather data associated with an environment of the vehicle; receiving an amount of ambient light observed in an environment external to the vehicle; and determining based on the weather data and the amount of ambient light to enable the display of the overlay of the vision system display on the display. The computer program product further includes determining based on the weather data and the amount of ambient light, to disable the display of the overlay of the vision system display on the display; and outputting the disable command.

### DESCRIPTION OF THE DRAWINGS

The exemplary embodiments will hereinafter be described in conjunction with the following drawing figures, wherein like numerals denote like elements, and wherein:
FIG. 1 is a functional block diagram illustrating a vehicle, such as an aircraft, that includes a display manager system for managing the display of an overlay of a synthetic vision system display or a combined vision system display on a display associated with the vehicle in accordance with various embodiments;
FIG. 2 is a dataflow diagram illustrating the display manager system of FIG. 1 in accordance with various embodiments;
FIG. 3 is a flowchart illustrating a method of the display manager system of FIG. 1 in accordance with various embodiments;
FIG. 4 is a continuation of the flowchart of FIG. 3;
FIG. 5 is a continuation of the flowchart of FIG. 3; and
FIG. 6 is a continuation of the flowchart of FIG. 3.

### DETAILED DESCRIPTION

The following detailed description is merely exemplary in nature and is not intended to limit the application and uses. Furthermore, there is no intention to be bound by any expressed or implied theory presented in the preceding technical field, background, brief summary or the following detailed description. In addition, those skilled in the art will appreciate that embodiments of the present disclosure may be practiced in conjunction with any suitable vehicle, such as rotorcraft, automobiles, marine vessels, etc., and that the following description regarding an aircraft is merely one exemplary embodiment for managing a vision display system on a display associated with a vehicle of the present disclosure. It should be noted that many alternative or additional functional relationships or physical connections may be present in an embodiment of the present disclosure. As used herein, the term module refers to any hardware, software, firmware, electronic control component, processing logic, and/or processor device, individually or in any combination, including without limitation: application specific integrated circuit (ASIC), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the display and the display system described herein is merely one exemplary embodiment of the present disclosure.

For the sake of brevity, conventional techniques related to signal processing, data transmission, signaling, control, image processing, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

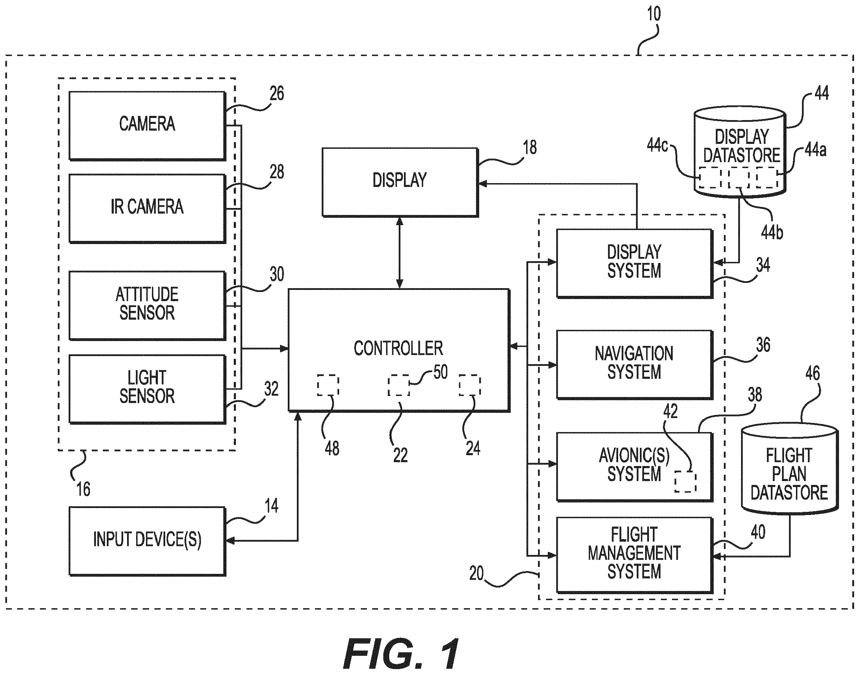

With reference to FIG. 1, a vehicle, such as an aircraft 10, is shown. In one example, the aircraft 10 comprises a fixed-wing aircraft; however, the aircraft 10 can comprise any vehicle, such as a rotorcraft, etc. In this example, the aircraft 10 includes one or more user input devices 14, one or more sensors 16, a display 18 and one or more aircraft systems 20, which are each in communication with a processing system or controller 22. As will be discussed herein, the controller 22 includes a vision display manager module 24 embedded therein, which enables the display of an overlay of a synthetic vision system display and/or a combined vision system display on the display 18 based on one or more conditions associated with the aircraft 10. Stated another way, the vision display manager module 24 determines, based on one or more conditions associated with the aircraft 10, to enable the display of the overlay of the synthetic vision system display and/or the combined vision system display on the display 18.

By managing the display of the vision system display with the controller 22, the workload of the pilot and/or copilot is reduced. Moreover, the managing the display of overlay of the synthetic vision system display and/or combined vision system display on the display 18 with the controller 22 reduces clutter on the display 18 by controlling the display 18 to disable the output of the synthetic vision system display or the combined vision system display based on conditions in which the pilot and/or copilot may not benefit from the display of the overlay. For example, the controller 22 controls the display 18 such that the overlay of the synthetic vision system display or the combined vision system display is not generated or output during conditions in which the pilot and/or copilot may be able to clearly see out of the window of the aircraft 10, such that the vision system display would not be useful to the pilot and/or copilot, but rather, may clutter the data presented on the display 18. As a further example, the controller 22 controls the display 18 such that the overlay of the synthetic vision system display and/or the combined vision system display is generated or output during conditions in which the pilot and/or copilot may have limited visibility out of the window of the aircraft 10, such that the vision system display is useful to the pilot and/or copilot during the navigation of the aircraft 10.

The one or more user input devices 14 enable a user (e.g., the pilot, copilot or other crew member) to interact with the aircraft 10, including the display 18 and the controller 22. The user input device 14 may be implemented as a keyboard (not separately shown), a microphone (not separately shown), a touchscreen layer associated with the display 18, a touch pen, a number pad, a mouse, a touchpad, a roller ball, a pushbutton, a switch, a joystick, a knob, a digital notepad or other suitable device to receive data and/or commands from the user. Of course, multiple input devices 14 may also be utilized. The input received from the user input device 14 is communicated to the controller 22 over a suitable communication architecture that facilitates the transfer of data, power, commands, etc., such as a bus associated with the aircraft 10.

The one or more sensors 16 are associated with the aircraft 10 to observe various conditions of the aircraft 10 and generate sensor signals based thereon. In one example, the one or more sensors 16 include at least a visible light camera or camera 26, an infrared (IR) camera 28, an attitude sensor 30 and a light sensor 32. The camera 26 comprises any camera capable of capturing image data or an image data stream, as known to those skilled in the art. The camera 26 is generally a forward looking camera. In certain embodiments, the camera 26 may comprise a color camera capable of capturing color images. In certain embodiments, the camera 26 may include a grayscale camera to capture grayscale images. In certain embodiments, the camera 26 may comprise a stereo camera assembly capable of capturing stereo images with depth information. For example, the camera 26 may include a stereo camera with two or more lenses and image sensors arranged to capture stereoscopic images about the aircraft 10 with depth information. The camera 26 may be a long-range camera for capturing images over an extended distance. Images may be captured by the camera 26 according to various timings or other considerations. In certain embodiments, for example, the camera 26 may capture images continuously as the aircraft 10 moves or based on state of flight of the aircraft 10. In certain embodiments, the controller 22 may cause the camera 26 to capture images at regular time intervals as the aircraft 10 moves. The image data or image data stream captured by the camera 26 is communicated to the controller 22 over a suitable communication architecture that facilitates the transfer of data, power, commands, etc., such as a bus associated with the aircraft 10.

The IR camera 28 comprises a forward looking infrared camera to capture infrared image data or an infrared image data stream, as known to those skilled in the art. The IR camera 28 may be a long-range camera for capturing images over an extended distance. Images may be captured by the IR camera 28 according to various timings or other considerations. In certain embodiments, for example, the IR camera 28 may capture images continuously as the aircraft 10 moves or based on state of flight of the aircraft 10. In certain embodiments, the controller 22 may cause the IR camera 28 to capture images at regular time intervals as the aircraft 10 moves. The image data or image data stream captured by the IR camera 28 is communicated to the controller 22 over a suitable communication architecture that facilitates the transfer of data, power, commands, etc., such as a bus associated with the aircraft 10.

The attitude sensor 30 observes an attitude of the aircraft 10 (roll, pitch and yaw) and generates sensor signals based thereon. In one example, the attitude sensor 30 is an attitude and heading reference system (AHRS) sensor, which observes the attitude and heading of the aircraft 10 and generates sensor signals based thereon. In other examples, the attitude sensor 30 may comprise an internal measurement unit (IMU), which observes the attitude of the aircraft 10 and generates sensor signals based thereon. The sensor signals from the attitude sensor 30 are communicated to the controller 22 over a suitable communication architecture that facilitates the transfer of data, power, commands, etc., such as a bus associated with the aircraft 10.

The light sensor 32 observes an ambient light surrounding the aircraft 10. In one example, the light sensor 32 is coupled to the aircraft 10 so as to observe an ambient light of the environment external to the aircraft 10. The light sensor 32 comprises any suitable sensor for observing ambient light as known in the art. The sensor signals from the light sensor 32 are communicated to the controller 22 over a suitable communication architecture that facilitates the transfer of data, power, commands, etc., such as a bus associated with the aircraft 10.

In this example, the display 18 is associated with and is onboard the aircraft 10. The display 18 is in communication with the vision display manager module 24 of the controller 22 to display a vision system display, which includes, for example, synthetic vision system images ("synthetic vision system display") superimposed over at least a portion of the display 18, or a combined display of synthetic vision system images and enhanced flight vision system images ("combined vision system display") superimposed over at least a portion of the display 18. While a single display 18 is illustrated in FIG. 1, it will be understood that the display 18 can include any number of displays that are viewable by occupants of the aircraft 10, including the pilot and/or copilot. In one example, the display 18 is a Head Up Display (HUD) device or a Head Down Display (HDD) device mounted within the cockpit of the aircraft 10. In other embodiments, the display 18 may be a pilot-worn display device, such as a near-to-eye or helmet-mounted display device. In yet other embodiments, the display 18 may be a portable electronic display device, such as a tablet computer or Electronic Flight Bag (EFB), which communicates with the controller 22 over a physical or wireless connection when operating within the aircraft 10. In certain embodiments, such as when display 18 is HUD device, the screen of display 18 is fully or partially transparent, in which case the synthetic vision images or the combined display of synthetic vision system images and enhanced flight vision system images are translucent to be superimposed over the real-world view of a runway and its surrounding environment, as seen through the screen of the display 18. Thus, in the example of a HUD device, the images provided by the synthetic vision system display and/or combined vision system display are translucent and are provided as an overlay onto the real-world view seen through the HUD

Thus, the display 18 comprises any suitable technology for displaying information, including, but not limited to, a liquid crystal display (LCD), organic light emitting diode (OLED), plasma, or a cathode ray tube (CRT). In this example, the display 18 is an electronic display capable of graphically displaying synthetic vision images superimposed over at least a portion of the display 18, a combined display of synthetic vision system images and enhanced flight vision system images or other data associated with the operation of the aircraft 10 under the control of the controller 22 and a display system 34 of the aircraft systems 20. In this regard, the display 18 is coupled to the controller 22 and the display system 34, and the controller 22 and the display system 34 cooperate to display, render and otherwise convey the synthetic vision images and/or the combined display of synthetic vision system images and enhanced flight vision system images superimposed over one or more graphical and/or textual representations or the real-world view associated with the operation of the aircraft 10.

In one example, the one or more aircraft systems 20 include the display system 34, a navigation system 36, an avionics system 38 and a flight management system 40. The display system 34 generally represents the hardware, firmware, processing logic and/or other components configured to control the display and/or rendering of one or more displays pertaining to operation of the aircraft 10 and/or systems 36, 38, 40 on the display 18 (e.g., synthetic vision system displays, enhanced flight vision system displays, combined vision system displays including synthetic vision system images and enhanced flight vision system images, navigational maps, and the like). In this regard, the display system 34 may access or include one or more display datastores 44 suitably configured to support operations of the display system 34, such as, for example, a terrain datastore 44a, an obstacle datastore 44b, a navigational datastore 44c, a geopolitical datastore, a terminal airspace datastore, a special use airspace datastore, or other information for rendering and/or displaying navigational maps and/or other content on the display 18. The terrain datastore 44a may also store information pertaining to runways and airports in addition to other terrain-related data, such as topological and terrain data. In addition to including a graphical representation of terrain, a navigational map displayed on the display 18 may include graphical representations of navigational reference points (e.g., waypoints, navigational aids, distance measuring equipment (DMEs), very high frequency omnidirectional radio ranges (VORs), and the like), designated special use airspaces, obstacles, and the like overlying the terrain on the map.

In one example, the display system 34 includes one or more of a synthetic vision system, enhanced flight vision system and/or a combined vision system as is generally known. Generally, in order to generate the synthetic vision system display, the synthetic vision system accesses the one or more display datastores 44, receives inputs from the navigation system 36 and generates a three-dimensional synthetic vision image that shows the topographical environment through which the aircraft is flying from the perspective of a person sitting in the cockpit of the aircraft. The three-dimensional synthetic vision image includes features that are graphically rendered including, without limitation, a synthetic perspective view of terrain and obstacles located proximate the aircraft's flight path, which form the synthetic vision system display.

The enhanced flight vision system generates a three-dimensional image of a flight environment utilizing sensor data received from a forward-looking sensor of the sensors 16 that are carried by the aircraft 10. The forward-looking sensor may be, for example, the IR camera 28, an additional infrared camera or a millimeter wave radar located within a radome beneath the aircraft 10. Based on the sensor signals, the enhanced flight vision system generates the three-dimensional enhanced flight vision image, which forms the enhanced flight vision system display. The enhanced flight vision system display is combined with the synthetic vision system images to create the combined vision system display. In the example of a combined vision system display, the synthetic vision system images provide a contextual view exceeding the scope of the enhanced flight vision image, and the enhanced flight vision image provides real time, sensor-derived visual information more closely resembling the actual flight environment of the aircraft 10.

As will be discussed below, the controller 22 generates and outputs an enable command or a disable command, and based on the enable command, the display system 34 outputs the overlay of the synthetic vision system display or the combined vision system display for the display 18 to be superimposed over other content rendered on the display 18 or, in the example of a HUD, superimposed over a portion of the real-world view associated with the aircraft 10. Based on the disable command, the display system 34 deactivates and removes the overlay of the synthetic vision system display or the combined vision system display from the display 18 (if present on the display 18) or inhibits the generation and output of the overlay on the display 18. The display system 34 is in communication with the controller 22 and the display 18 for controlling the rendering of the overlay on the display 18 over a suitable communication architecture that facilitates the transfer of data, commands, power, such as a bus, associated with the aircraft 10.

The flight management system 40 is communicatively coupled to the navigation system 36, the avionics system 38 and the controller 22 to support navigation, flight planning, and other aircraft control functions in a conventional manner, as well as to provide real-time data and/or information regarding the operational status of the aircraft 10 to the controller 22. Briefly, the navigation system 36 provides substantially real-time navigational data regarding the operation of the aircraft 10. In this example, the navigation system 36 includes at least a global positioning system (GPS), which provides a current global position of the aircraft 10. The navigation system 36 may also include one or more position sensors, such as radio aids, a radio altimeter, scanning distance measuring equipment, VHF omnidirectional radio range (VORs) or long-range aid to navigation (LORAN), inertial reference systems (IRS). The navigation system 36 may integrate the positions obtained from the one or more position sensors and determine a single position of the aircraft 10 (e.g. latitude, longitude, altitude, heading) and a corresponding accuracy of the position. The navigation system 36 may also determine, based on the GPS, a proximity of the aircraft 10 to ground.

The avionics system 38 obtains and provides real-time flight related information to the controller 22, which may be displayed on the display 18 by the display system 34 and/or otherwise communicated to the pilot, copilot and/or a crew member. Generally, the avionics system 38 may include multiple avionics systems, such as a weather system 42, an air traffic management system, a radar system, a traffic avoidance system, an autopilot system, an autothrust system, a flight control system, hydraulics systems, pneumatics systems, environmental systems, electrical systems, engine systems, trim systems, lighting systems, crew alerting systems, electronic checklist systems, an electronic flight bag and/or another suitable avionics system. The weather system 42 may include onboard radar associated with the aircraft 10, satellite-based weather services, weather from the Global Data Center, etc. Thus, the avionics system 38 supports navigation, flight planning and control functions of the aircraft 10 in a conventional manner.

The flight management system 40 manages a flight plan associated with the aircraft 10 while in-flight. In one example, the flight management system 40 receives the flight plan data from a communications system associated with the aircraft 10 and stores the flight plan data in a flight plan datastore 46 onboard the aircraft 10. Generally, the flight plan data comprises the planned or target flight path for the aircraft 10, from take-off to landing, which can include a selected flight plan for take-off, a selected flight plan for level or cruising flight, a selected flight plan for approach to landing, and so on. The flight management system 40 is in communication with the controller 22 over a suitable communication architecture that facilitates the transfer of data, power, commands, etc., such as a bus associated with the aircraft 10.

The flight plan datastore 46 stores the information required for managing the flight plan, as is known in the art. The flight plan datastore 46 can be defined in the ARINC 424 standard. The flight plan datastore 46 stores, for example, waypoints/intersections, airways, radio navigations aids, airports, runways, standard instrument departure data, standard terminal arrival data, holding patterns and instrument approach procedures. The flight plan datastore 46 also stores the defined legs of each of the flight plans.

The controller 22 generally represents the hardware, circuitry, processing logic, and/or other components configured to facilitate communications and/or interaction between the elements of the aircraft 10 and perform additional processes, tasks and/or functions to support operation of the aircraft 10, as described in greater detail below. Depending on the embodiment, the controller 22 may be implemented or realized with a general purpose processor 48, a microprocessor, a microcontroller, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. In practice, the controller 22 includes processing logic that may be configured to carry out the functions, techniques, and processing tasks associated with the operation of the aircraft 10 described in greater detail below. Furthermore, the steps of a method or algorithm described in connection with the embodiments disclosed herein may be embodied directly in hardware, in firmware, in a software module executed by the controller 22, or in any practical combination thereof. In accordance with one or more embodiments, the controller 22 includes or otherwise accesses a data storage element or media 50, such as a memory (e.g., RAM memory, ROM memory, flash memory, registers, a hard disk, or the like) or another suitable non-transitory short or long term storage media capable of storing computer-executable programming instructions or other data for execution that, when read and executed by the processor 48 of the controller 22, cause the processor 48 to execute and perform one or more of the processes, tasks, operations, and/or functions described herein.

The vision display manager module 24 is embedded within the controller 22. The vision display manager module 24 receives as input conditions associated with the aircraft 10, including, an attitude of the aircraft 10 from the attitude sensor 30; an external light condition from the light sensor 32; a position of the aircraft 10 from the navigation system 36; a state of the flight of the aircraft 10 from the flight management system 40; and weather from the weather system 42 of the avionics system 38. The vision display manager module 24 also receives as input the image data or image data stream from the camera 26; and the infrared image data or infrared image data stream from the IR camera 28. The vision display manager module 24 also receives as input user data. Based on the input, the vision display manager module 24 determines whether to generate an enable command to enable the display of the overlay of the synthetic vision system display and/or combined vision system display to assist the pilot in navigating the aircraft 10; or whether to generate a disable command to disable the display of the overlay of the synthetic vision system display and/or combined vision system display to reduce clutter on the display 18. By controlling the display of the overlay of the synthetic vision system display and/or combined vision system display on the display 18 with the controller 22, the pilot and/or copilot's workload is reduced.

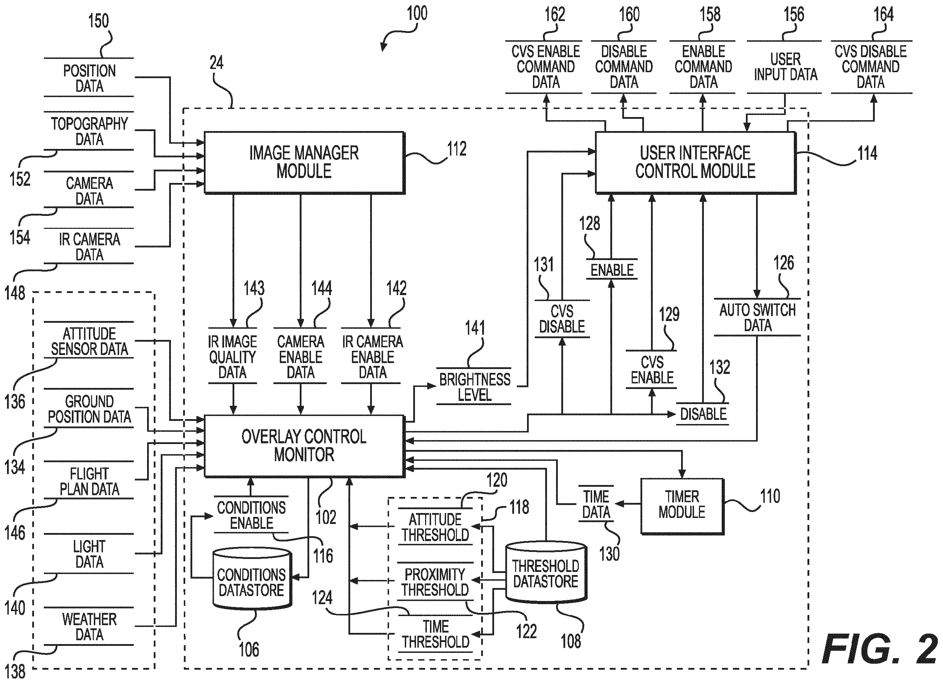

Referring now to FIG. 2, and with continued reference to FIG. 1, a dataflow diagram illustrates various embodiments of a display manager system 100 for the aircraft 10 for the managing the display of the overlay of the synthetic vision system display and/or combined vision system display on the display 18, which may be embedded in the vision display manager module 24 of the controller 22. Various embodiments of the display manager system 100 according to the present disclosure can include any number of sub-modules embedded within the vision display manager module 24. As can be appreciated, the sub-modules shown in FIG. 2 may be combined and/or further partitioned to similarly manage the display of the overlay of the synthetic vision system display and/or combined vision system display on the display 18 associated with the aircraft 10. Inputs to the display manager system 100 may be received from one or more of the user input devices 14 (FIG. 1), received from the one or more sensors 16 (FIG. 1), received from the avionics system 38 (FIG. 1), received from the flight management system 40 (FIG. 1), received from the navigation system 36 (FIG. 1), received from the display datastore 44 associated with the display system 34 (FIG. 1), received from other control modules (not shown), and/or determined/modeled by other sub-modules (not shown) within the vision display manager module 24. In various embodiments, the vision display manager module 24 includes an overlay control module 102, a conditions datastore 106, a thresholds datastore 108, a timer module 110, an image manager module 112 and a user interface (UI) control module 114.

The conditions datastore 106 stores a look up table of one or more weather and lighting conditions associated with the operation of the aircraft 10 for enabling the display of the overlay of the synthetic vision system display and/or combined vision system display on the display 18. Thus, the conditions datastore 106 stores one or more lookup tables, which provide a conditions enable 116 based on the weather conditions received from the weather system 42 and the lighting conditions observed by the light sensor 32. The conditions enable 116 and the associated weather and lighting conditions stored in the conditions datastore 106 are each predefined, or factory set values. For example, the conditions enable 116 may be stored in the look-up table based on a weather condition including, but not limited to, fog, clouds or precipitation (rain, snow, sleet, etc.) and a lighting condition of low ambient light, darkness or direct sun glare.

In another example, each of the weather conditions and the lighting conditions may be assigned a weighted value and a sum of the weather conditions and the lighting conditions may be used to set the conditions enable 116. For example, obstructive conditions such as clouds, snow, sleet, darkness and direct sun glare may be assigned a higher value, such as 1.0; less obstructive conditions, such as low ambient light, fog and rain, may be assigned a value of 0.5; and un-obstructive conditions, such as daylight, may be assigned a value of 0. Each of the values may be added together to arrive at a total value for the weather conditions and the lighting conditions, which may be compared to a threshold value (stored in the thresholds datastore 108, for example) and the conditions enable 116 may be set based on the comparison. In the present example, the threshold value for the conditions enable 116 may be a value of 0.9, such that the value of 1.0 will provide the conditions enable 116 for enabling the display of the overlay of the synthetic vision system display and/or combined vision system display on the display 18. Thus, in this example, weather conditions of rain and fog would sum to 1.0, which is greater than the threshold value of 0.9 and the conditions enable 116 would be set for enabling the display of the overlay of the synthetic vision system display and/or combined vision system display on the display 18.

The thresholds datastore 108 stores thresholds associated with one or more conditions of the aircraft 10. Thus, the thresholds datastore 108 stores data that provides thresholds 118 for a particular condition of the aircraft 10. For example, the thresholds datastore 108 stores an attitude threshold 120, which is a threshold value for the attitude of the aircraft 10; stores a proximity threshold 122, which is a threshold value for a proximity of the aircraft 10 to ground; and stores a time threshold 124, which is a threshold value for a time that has elapsed since an enable command (a enable 128 or a combined vision system (CVS) enable 129) or a disable command (a CVS disable 131 or a disable 132) has been output to the display system 34. Each of the thresholds 118 (the attitude threshold 120, the proximity threshold 122 and the time threshold 124) stored in the thresholds datastore 108 are predefined, and factory set values. In certain embodiments, one or more of the thresholds 118 may comprise an interval. In one example, the attitude threshold 120 is an interval of about negative 210 to 30 degrees pitch (or about negative 30 to 30 degrees pitch based on the extreme pitch value handling) and within this interval, the aircraft 10 is determined to be orientated toward the ground. In one example, the proximity threshold 122 is about 10,000 feet, below which, the aircraft 10 is determined to be in sufficient proximity to ground. In one example, the time threshold 124 is about 10 seconds, above which, it is determined to be acceptable to change the enable command or the disable command (to respectively output the overlay of the synthetic vision system display and/or combined vision system display; or to disable the output of the overlay of the synthetic vision system display and/or combined vision system display) to ensure that the display 18 does not flicker.

The overlay control module 102 receives as input auto switch data 126 from the UI control module 114. The auto switch data 126 is input received, via the pilot and/or copilot's manipulation of one or more of the input devices 14 (FIG. 1) to enable or disable the automatic display of the overlay of the synthetic vision system display and/or combined vision system display on the display 18. Based on the auto switch data 126 to enable the automatic overlay, the overlay control module 102 determines whether to set the enable 128, the CVS enable 129, the CVS disable 131 or the disable 132 for the UI control module 114 to control the automatic overlay of the synthetic vision system display and/or combined vision system display on the display 18 as will be discussed herein.

The overlay control module 102 also receives as input time data 130 from the timer module 110. The time data 130 is a time that has elapsed since the overlay control module 102 has set the enable 128, the CVS enable 129, the CVS disable 131 or the disable 132 for the UI control module 114. Generally, when the overlay control module 102 sets the enable 128, the CVS enable 129, the CVS disable 131 or the disable 132 for the UI control module 114, the overlay control module 102 also sets a reset for the timer module 110 to reset the time data 130 to zero. It should be noted that although the time data 130 is shown as being provided from a separate module associated with the vision display manager module 24, the time data 130 may be provided from other modules associated with the vision display manager module 24 and/or controller 22, such as an internal clock and the overlay control module 102 may calculate a time difference based on input from the internal clock. The overlay control module 102 retrieves the time threshold 124 from the thresholds datastore 108. The overlay control module 102 compares the time that has elapsed since the overlay control module 102 set the enable 128, the CVS enable 129, the CVS disable 131 or the disable 132 for the UI control module 114 to the time threshold 124. Based on the comparison, if the time that has elapsed (from the time data 130) is greater than the time threshold 124, the overlay control module 102 determines to proceed with deciding whether to enable or disable the display of the overlay of the synthetic vision system display and/or combined vision system display on the display 18. If, however, the time that has elapsed (from the time data 130) is less than the time threshold 124, the overlay control module 102 proceeds to wait until the time data 130 exceeds the time threshold 124. This prevents a flickering of the overlay of the synthetic vision system display and/or combined vision system display on the display 18.

Based on a determination to proceed, the overlay control module 102 receives as input ground position data 134. The ground position data 134 is the position of the aircraft 10 relative to ground, which is received from the navigation system 36 (FIG. 1). Based on the ground position data 134, the overlay control module 102 retrieves the proximity threshold 122 from the thresholds datastore 108. The overlay control module 102 compares the position of the aircraft 10 to ground (from the ground position data 134) to the proximity threshold 122 and determines whether the position of the aircraft 10 is less than the proximity threshold 122. If the position of the aircraft 10 is greater than the proximity threshold 122, the overlay control module 102 sets the disable 132 for the UI control module 114. The disable 132 is data for the UI control module 114 to remove or inhibit the overlay of the synthetic vision system and/or combined vision system on the display 18.

The overlay control module 102 also receives as input attitude sensor data 136. The attitude sensor data 136 is the sensor signals received from the attitude sensor 30 (FIG. 1). The overlay control module 102 processes the sensor signals and determines the attitude of the aircraft 10. The overlay control module 102 retrieves the attitude threshold 120 from the thresholds datastore 108. The overlay control module 102 compares the attitude of the aircraft 10 (from the attitude sensor data 136) to the attitude threshold 120 and determines whether the attitude of the aircraft 10 is less than the attitude threshold 120 or is within the interval defined by the attitude threshold 120. If the attitude of the aircraft 10 is greater than the attitude threshold 120 or is outside of the interval defined by the attitude threshold 120, the overlay control module 102 sets the disable 132 for the UI control module 114.

The overlay control module 102 also receives as input weather data 138 and light data 140. The weather data 138 is the weather along the flight plan of the aircraft 10, which is received from the weather system 42 of the avionics system 38 (FIG. 1). The light data 140 is the sensor signals received from the light sensor 32 (FIG. 1). The overlay control module 102 processes the light data 140 and determines an amount of light observed external to the aircraft 10. For example, the overlay control module 102 processes the light data 140 and determines whether the aircraft 10 is operating in daylight, twilight or semi-darkness, low light, darkness, etc. The overlay control module 102 queries the conditions datastore 106 and retrieves the condition enable 116 associated with the weather and the determined amount of light external to the aircraft 10. If the condition enable 116 is not associated with the weather and the amount of light external to the aircraft 10, the overlay control module 102 sets the disable 132 for the UI control module 114.

In addition, based on the light data 140, the overlay control module 102 determines and sets a brightness level 141 for the UI control module 114. In this regard, based on the amount of ambient light surrounding the aircraft 10, as observed by the light sensor 32, the overlay control module 102 determines a brightness level for the output of the overlay of the synthetic vision system display and/or combined vision system display on the display 18. In one example, the overlay control module 102 may process the light data 140, determine a value for the amount of ambient light observed and may determine the brightness level 141 based on the value associated with the ambient light. In one example, the value of the amount of ambient light may range from a value of 0.0 for complete darkness to a value of 1.0 for full daylight. In this example, for a value of the amount of ambient light between 0.0 and 0.2, the overlay control module 102 may set the brightness level 141 as full brightness. If the value of the amount of ambient light is between 0.2 to 0.5, the brightness gradually decreases from the full brightness; and if the value of the amount of ambient light is 0.5 to 1.0, the overlay control module 102 sets the disable 132 for the UI control module 114. Thus, when the amount of ambient light is between 0 (complete darkness) and 0.5 (semi-darkness or twilight), the overlay control module 102 sets the associated brightness level 141 for the UI control module 114. When the amount of ambient light is between 0.5 (semi-darkness or twilight) and 1.0 (daylight), the overlay control module 102 sets the disable 132 for the UI control module 114. The ranges associated with the amount of ambient light may be stored in a memory associated with the overlay control module 102, or may be stored in the thresholds datastore 108 and retrieved by the overlay control module 102 during processing of the light data 140. In addition, it should be noted that the determination of the brightness level 141 may be optional.

The overlay control module 102 receives as input IR camera enable data 142 from the image manager module 112. The IR camera enable data 142 is data that indicates, based on the image or image data stream from the IR camera 28, to enable the overlay of the synthetic vision system display and/or combined vision system display on the display 18. If the IR camera enable data 142 is not received, the overlay control module 102 sets the disable 132 for the UI control module 114.

Based on the receipt of the IR camera enable data 142, the overlay control module 102 receives as input camera enable data 144 from the image manager module 112. The camera enable data 144 is data that indicates, based on the image or image data stream from the camera 26, to enable the overlay of the synthetic vision system display and/or combined vision system display on the display 18. Based on the camera enable data 144, the overlay control module 102 sets the enable 128 for the UI control module 114. The enable 128 is data for the UI control module 114 to generate and output the overlay of the synthetic vision system on the display 18.

Based on the camera enable data 144, the overlay control module 102 also receives as input the IR image quality data 143. If the IR image quality data 143 indicates that the IR image data is obscured, the overlay control module 102 sets the CVS disable 131 for the UI control module 114. The CVS disable 131 is data for the UI control module 114 to remove or inhibit the overlay of the combined vision system on the display 18. Otherwise, if the IR image quality data 143 indicates that the IR image data is unobscured, the overlay control module 102 sets CVS enable 129 for the UI control module 114. The CVS enable 129 is data for the UI control module 114 to generate and output the overlay of the combined vision system on the display 18. If the camera enable data 144 is not received, the overlay control module 102 sets the disable 132 for the UI control module 114.

The overlay control module 102 also receives as input flight plan data 146. The flight plan data 146 is data regarding which flight plan the aircraft 10 is on, including, but not limited to the take-off, level or cruising flight, approach to landing. The flight plan data 146 also indicates whether the aircraft 10 is on the ground and at the gate. The flight plan data 146 is received from the flight management system 40. Based on the flight plan data 146, the overlay control module 102 determines whether a state of the aircraft 10 in flight has changed. For example, if prior received flight plan data 146 indicated level or cruising flight, and the most recently received flight plan data 146 indicates approach to landing, the overlay control module 102 determines a change in state of the aircraft 10. Based on the change in state of the aircraft 10, the overlay control module 102 determines to proceed with determining whether to overlay the synthetic vision system display and/or combined vision system display on the display 18. Alternatively, the overlay control module 102 may determine to proceed with determining whether to overlay the synthetic vision system display and/or combined vision system display on the display 18 based on the flight plan data 146 indicating that the aircraft 10 is on approach to landing or take-off. In addition, based on the flight plan data 146 indicating the aircraft 10 is on the ground and/or at the gate, the overlay control module 102 may optionally discontinue the determining. Optionally, the overlay control module 102 may receive as input data from the navigation system 36 or data from the sensors 16, and based on that data, determine that the aircraft 10 is on the ground and/or at the gate. In certain instances, the operator may desire to use the overlay when taxiing the aircraft 10 on the ground due to fog, for example. In other instances, the operator may desire for the overlay to be discontinued when operating on the ground.

The timer module 110 is a timer that keeps track of the time that has elapsed since a change (enable or disable) of the overlay of the synthetic vision system display and/or combined vision system display on the display 18. This ensures that the overlay is not disrupting to the pilot and/or copilot and inhibits flickering of the overlay on the display 18. The timer module 110 sets the time data 130, which comprises the time that has elapsed since the overlay has been enabled or disabled on the display 18. The timer module 110 may also receive a reset from the overlay control module 102 to reset the time to zero.

The image manager module 112 receives as input IR camera data 148 from the IR camera 28. The IR camera data 148 is the image data or image data stream from the IR camera 28. Based on the IR camera data 148, the image manager module 112 receives as input position data 150. The position data 150 is a global position of the aircraft 10, which is received from the navigation system 36 (FIG. 1). Based on the position data 150, the image manager module 112 queries the one or more display datastores 44 and retrieves topography data 152 associated with the global position of the aircraft 10. The topography data 152 includes objects that are present at the current global position of the aircraft 10. In one example, the topography data 152 includes, but is not limited to, data from the terrain datastore 44a, data from the obstacle datastore 44b, data from the navigation datastore 44c, an airport or moving map data, etc. Exemplary objects retrieved in the topography data 152 include buildings, natural structures, railroads, bodies of water, runways, etc.

The image manager module 112 processes the IR camera data 148 to determine one or more objects in the IR camera data 148. The image manager module 112 determines whether the objects in the IR camera data 148 match or correspond with objects in the topography data 152. Stated another way, the image manager module 112 determines, based on the objects in the topography data 152, whether the objects are identified in the IR camera data 148. In one example, the image manager module 112 determines whether the objects are identified with an artificial neural network, computer vision or feature detection image processing in which the image manager module 112 processes the IR camera data 148 to determine whether features in the IR camera data 148 correspond with or match objects in the topography data 152. In some embodiments, the neural network, computer vision or feature detection image processing performed by the image manager module 112 may be performed to reach a certainty level at which the image manager module 112 is substantially certain or confident (greater than about 75%, for example) that a pre-defined number of objects identified in the IR camera data 148 corresponds with objects in the topography data 152. For example, the image manager may require about 75% certainty or confidence when three objects are detected to correspond with the topography data 152, and may require a higher level of certainty or confidence when less than 3 objects are identified. In one example, the image manager module 112 may process the image data to identify up to three objects, and may compare those three identified objects to the objects contained in the topography data 152 to determine whether the identified objects correspond with the objects in the topography data 152 within the pre-defined certainty or confidence level. If the identified objects correspond or match at the pre-defined certainty or confidence level, the image manager module 112 sets the IR camera enable data 142 for the overlay control module 102.

The image manager module 112 also processes the IR camera data 148 to determine whether the IR image data from the IR camera data 148 is obscured. In one example, the image manager module 112 determines the IR image data is obscured based on whether the pre-defined number of objects identified in the IR camera data 148 corresponds with objects in the topography data 152. If the image manager module 112 determines that the identified objects correspond or match at the pre-defined certainty or confidence level, the image manager module 112 sets IR image quality data 143 as unobscured for the overlay control module 102. If the image manager module 112 determines that the identified objects do not correspond or match at the pre-defined certainty or confidence level, the image manager module 112 sets IR image quality data 143 as obscured for the overlay control module 102. The IR image quality data 143 is a notification that the IR camera data 148 from the IR camera 28 is unobscured or obscured. It should be noted that other techniques may be used to determine whether the IR camera data 148 is obscured, including, but not limited to an amount of noise in the signal received from the IR camera data 148, a histogram evaluation of the IR camera data 148, a trained neural network, pattern classification algorithm, noise classification algorithm, etc.

The image manager module 112 receives as input camera data 154 from the camera 26. The camera data 154 is the image data or image data stream from the camera 26. The image manager module 112 processes the image data or image data stream of the camera data 154 to determine whether the camera data 154 is obscured by fog, clouds, etc. In one example, the image manager module 112 determines an amount of noise in the signal received from the camera data 154, and if the amount of noise is greater than a pre-defined threshold, the image manager module 112 determines that the camera data 154 is obscured by fog, clouds, etc. In another example, the image manager module 112 uses an artificial neural network, computer vision, or feature detection image processing to determine a location of the horizon in the camera data 154, and if the horizon is at an unexpected position as compared to a pre-determined position of the horizon, the image manager module 112 determines that the image is obscured. In one example, other modules associated with the controller 22 may determine a position of the horizon based on the attitude sensor data 136 from the attitude sensor 30, sensor data from other sensors associated with the aircraft 10, such as an altitude sensor, and data retrieved from the terrain datastore 44a. Generally, based on the attitude sensor data 136, the altitude and the data from the terrain datastore 44a, the other module associated with the controller 22 may determine the expected or estimated position of the horizon. The image manager module 112 may receive the estimated position of the horizon as input, and compare the location of the horizon in the camera data 154 to the estimated position of the horizon. If the estimated position of the horizon does not match the location of the horizon in the camera data 154, the image manager module 112 may determine that the image from the camera 26 is obscured.

In other embodiments, the image manager module 112 uses an artificial neural network, computer vision, or feature detection image processing to determine sky and terrain features, and if there is not a detectable difference between a number of features determined for the sky and the number of features determined for the terrain, the image manager module 112 determines that the camera data 154 is obscured. In yet other embodiments, the image manager module 112 determines an amount of brightness of the images in the camera data 154, via a histogram evaluation of the camera data 154, for example, and if the brightness is below a pre-defined threshold, the image manager module 112 determines that the camera data 154 is obscured by clouds, fog, etc. In addition, it should be noted that one or more of the above techniques may be employed to determine whether the camera data 154 is obscured by fog, clouds, etc. If the camera data 154 is obscured, the image manager module 112 sets the camera enable data 144 for the overlay control module 102. If the image data or image data stream of the camera data 154 is unobscured by clouds, fog, etc. the image manager module 112 does not set the camera enable data 144 as the view out of the window of the aircraft 10 is sufficient for the navigation of the aircraft 10. This reduces clutter on the display 18.

The UI control module 114 receives user input data 156. The user input data 156 is data received through the pilot and/or copilot's manipulation of the user input devices 14 (FIG. 1). The UI control module 114 processes the user input data 156 and determines whether the user has selected to auto-switch on the overlay of the synthetic vision system display and/or combined vision system display on the display 18. Based on the user input data 156, if the user has selected to overlay the synthetic vision system display and/or combined vision system display on the display 18, the UI control module 114 sets the auto switch data 126 for the overlay control module 102.

The UI control module 114 also receives as input the enable 128 from the overlay control module 102. Based on the enable 128, the UI control module 114 outputs enable command data 158. The enable command data 158 is a command for the display system 34 to generate and output the overlay of the synthetic vision system display on the display 18. Optionally, the UI control module 114 receives as input the brightness level 141. Based on the brightness level 141 and the enable 128, the UI control module 114 outputs the enable command data 158 to include the determined brightness level for the overlay on the display 18.

The UI control module 114 also receives as input the CVS enable 129 from the overlay control module 102. Based on the CVS enable 129, the UI control module 114 outputs CVS enable command data 162. The CVS enable command data 162 is a command for the display system 34 to generate and output the overlay of the combined vision system display on the display 18. Optionally, the UI control module 114 receives as input the brightness level 141. Based on the brightness level 141 and the CVS enable 129, the UI control module 114 outputs the CVS enable command data 162 to include the determined brightness level for the overlay of the combined vision system display on the display 18.

The UI control module 114 also receives as input the disable 132 from the overlay control module 102. Based on the disable 132, the UI control module 114 outputs disable command data 160. The disable command data 160 is a command for the display system 34 to disable the output the overlay of the synthetic vision system display and/or combined vision system display on the display 18.

The UI control module 114 also receives as input the CVS disable 131 from the overlay control module 102. Based on the CVS disable 131, the UI control module 114 outputs CVS disable command data 164. The CVS disable command data 164 is a command for the display system 34 to disable the output the overlay of the combined vision system display on the display 18. Note that the CVS disable command data 164 may disable the output of the overlay of the combined vision system display on the display 18, while the overlay of the synthetic vision system display may remain enabled and active on the display 18.

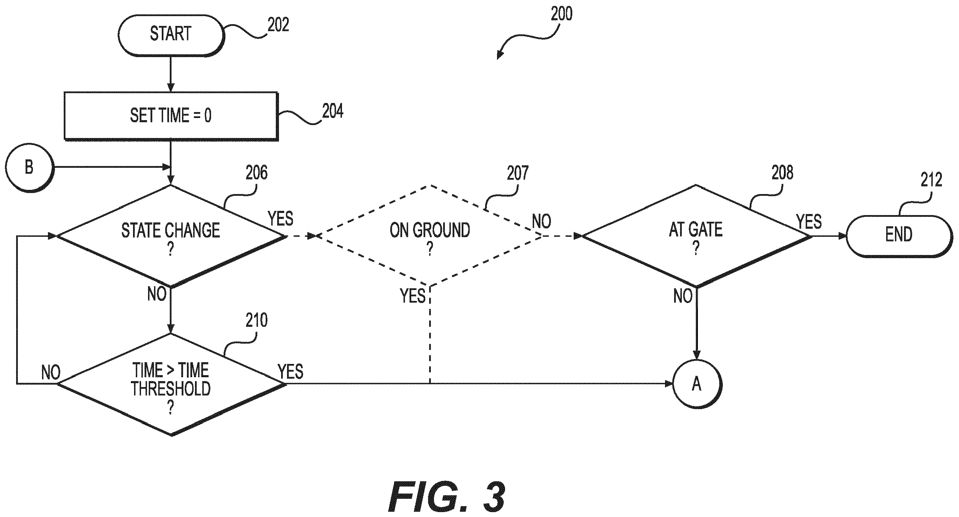

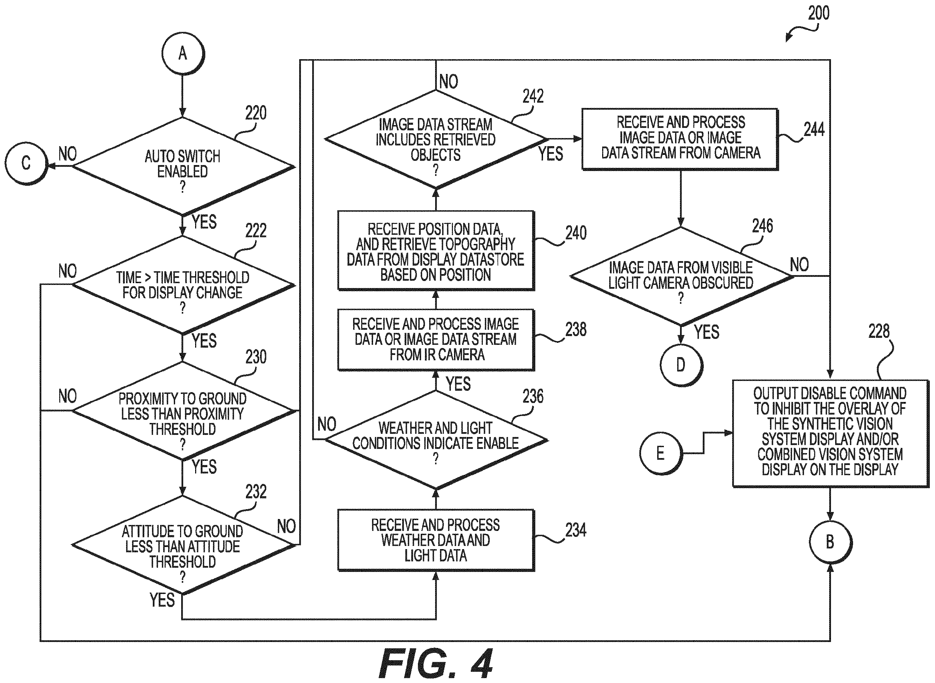

Referring now to FIGS. 3-6, and with continued reference to FIGS. 1 and 2, a flowchart illustrates a control method 200 that can be performed by the vision display manager module 24 of FIGS. 1 and 2 in accordance with the present disclosure. The control method 200 is performed by the processor 48 of the controller 22 or a processor associated with the vision display manager module 24 of the controller 22. As can be appreciated in light of the disclosure, the order of operation within the method is not limited to the sequential execution as illustrated in FIGS. 3 and 4 but may be performed in one or more varying orders as applicable and in accordance with the present disclosure. In various embodiments, the method can be scheduled to run periodically or based on predetermined events, such as based on a state change of the flight plan of the aircraft 10.

With reference to FIG. 3, the method begins at 202. At 204, the method sets the time equal to zero, for example, by resetting the timer module 110 (FIG. 2). At 206, the method determines whether the state of the aircraft 10 has changed. In one example, the method determines, based on the flight plan data 146, whether the flight plan of the aircraft 10 has changed from a prior flight plan. For example, whether the flight plan of the aircraft 10 has changed from level flight to approach to landing. If true, the method proceeds to 208. Optionally, the method proceeds to 207. Otherwise, at 210, the method determines whether the time of the time data 130 is greater than the time threshold 124 received from the thresholds datastore 108. If true, the method proceeds to A on FIG. 4. Otherwise, the method loops to 206.

Optionally, at 207, the method determines whether the flight plan data 146 indicates that the aircraft 10 is on the ground. In certain instances, the method may receive as input data from the navigation system 36 or data from the sensors 16, and based on that data, determine whether the aircraft 10 is on the ground. If the aircraft 10 is on the ground, the method proceeds to 208. Otherwise, the method proceeds to A on FIG. 4. At 208, the method determines whether the flight plan data 146 indicates that the aircraft 10 is at the gate. If true, the method ends at 212. Otherwise, the method proceeds to A on FIG. 4.

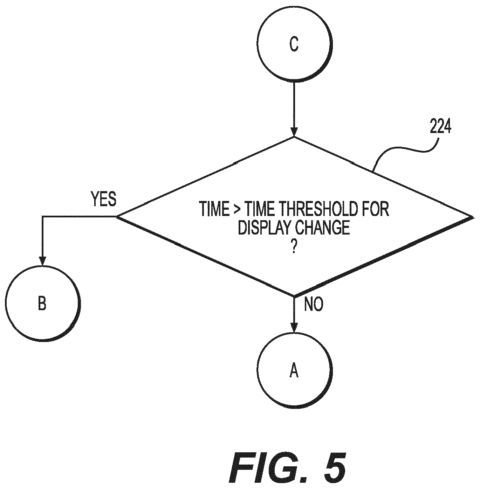

With reference to A on FIG. 4, at 220, the method determines whether the auto switch is enabled based on the receipt of user input data 156 from the pilot and/or copilot. If false, the method proceeds to C on FIG. 5. Otherwise, if true, the method proceeds to 222. With reference to C on FIG. 5, at 224, the method determines whether the time elapsed (from the time data 130) is greater than the time threshold 124. If true, the method, proceeds to A on FIG. 4. If false, the method also proceeds to B on FIG. 3.

With reference back to FIG. 4, at 222, the method determines whether the time elapsed (from the time data 130) is greater than the time threshold 124. If false, the method also proceeds to 228. At 228, the method outputs the disable command (disable command data 160) for the display system 34 to control the display 18 to disable the rendering of the overlay of the synthetic vision system display and/or the combined vision system display on the display 18.

If true, the method, at 230, determines whether the proximity of the aircraft 10 to the ground is less than the proximity threshold 122. For example, the method compares the ground position data 134 to the proximity threshold 122 and in one example, determines whether the ground position data 134 is within the interval defined by the proximity threshold 122. If false, the method proceeds to 228.

Otherwise, if true, the method proceeds to 232. At 232, the method determines whether the attitude of the aircraft 10 is less than the attitude threshold 120. For example, the method compares the attitude sensor data 136 to the attitude threshold 120 and determines whether the attitude from the attitude sensor data 136 is less than the attitude threshold 120. If false, the method also proceeds to 228.

If true, the method proceeds to 234. At 234, the method receives and processes the weather data 138 from the weather system 42, and the light data 140 from the light sensor 32. At 236, the method determines whether the weather data 138 and the light data 140 indicate to enable the overlay. In one example, based on the weather data 138 and the light data 140, the method queries the conditions datastore 106 and determines whether the conditions enable 116 is associated with the weather data 138 and the light data 140. If false, the method also proceeds to 228.

Otherwise, if true, at 238, the method receives and processes the IR camera data 148 from the IR camera 28 to identify one or more objects in the IR camera data 148. At 240, the method receives the position data 150 from the navigation system 36, and retrieves the topography data 152 associated with the position of the aircraft 10 (from the position data 150). At 242, the method determines whether the image data or image data stream from the IR camera 28 contains objects that correspond with or match the objects retrieved in the topography data 152. If false, the method also proceeds to 228.

If true, at 244, the method receives and processes the camera data 154 from the camera 26. At 246, the method determines whether the image data or image data stream from the camera 26 (the camera data 154) is at least partially obscured. In one example, the method determines whether the image data from the camera 26 is obscured by fog or clouds, for example. If false, such that the image data or image data stream from the camera 26 is unobscured, the method also proceeds to 228.

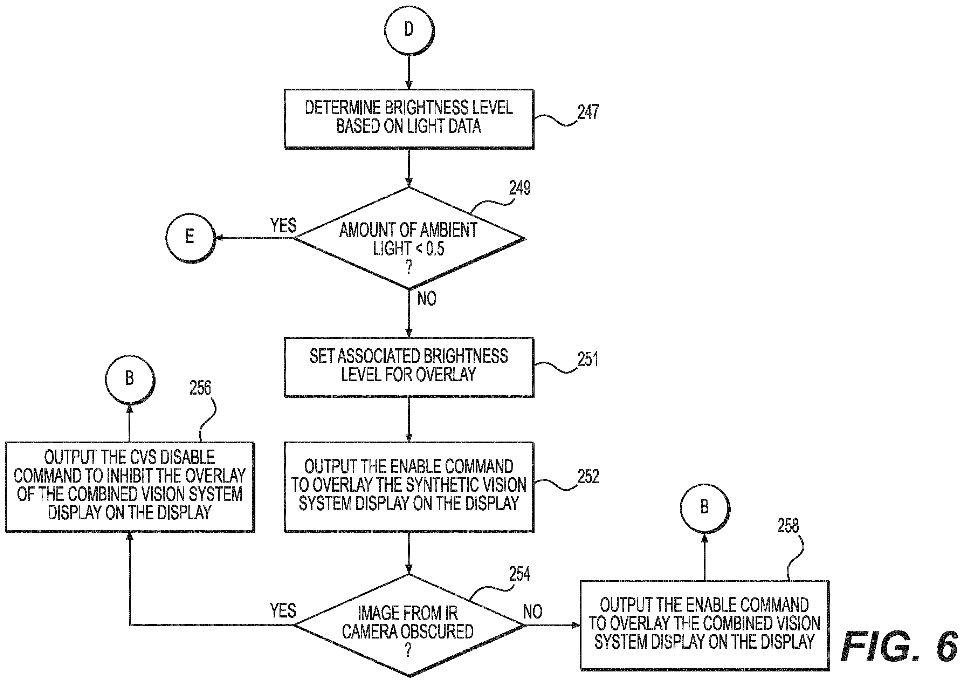

Otherwise, if true, the method proceeds to D on FIG. 6. From D on FIG. 6, at 247, the method determines the brightness level for the overlay based on the amount of ambient light observed by the light sensor 32 by retrieving the associated brightness level from the thresholds datastore 108, for example. At 249, the method determines whether the amount of ambient light observed is greater than about 0.5, in the example of 0.0 for complete darkness (no ambient light) and 1.0 for full daylight. If true, the method proceeds to E on FIG. 4.

Otherwise, if the amount of ambient light is less than 0.5, the method at 251, sets the associated brightness level 141 for the overlay of the synthetic vision system display and/or combined vision system display on the display 18. As discussed, the brightness level 141 associated with the amount of ambient light between 0.0 and 0.2 is full brightness, and the brightness level 141 associated with the amount of ambient light between 0.2 and 0.5 is gradually reduced (from full brightness toward low brightness) in a scalar fashion for the amount of ambient light observed (0.2 is associated with full brightness and decreases in a scalar fashion from 0.2 to 0.5, with 0.5 associated with low brightness) based on the value of the amount of ambient light observed. It should be noted that blocks 247, 249 and 251 may be optional.

At 252, the method outputs the enable command (enable command data 158) for the display system 34 to control the display 18 to render the overlay of the synthetic vision system display on the display 18. Optionally, the method outputs the enable command to the display system 34 to control the display 18 to render the overlay at the determined brightness level.

At 254, the method receives and processes the IR camera data 148 from the IR camera 28 to determine whether the IR image data is obscured. If the IR image data is obscured, at 256, the method outputs the disable command (CVS disable command data 164) for the display system 34 to control the display 18 to disable the rendering of the overlay of the combined vision system display on the display 18. The method proceeds to B on FIG. 3.

Otherwise, at 258, the method outputs the enable command (CVS enable command data 162) for the display system 34 to control the display 18 to render the overlay of the combined vision system display on the display 18. Optionally, the method outputs the enable command to the display system 34 to control the display 18 to render the overlay at the determined brightness level. The method proceeds to B on FIG. 3.

Thus, the vision display manager module 24 of the controller 22 provides the pilot and/or copilot with the overlay of the synthetic vision system display and/or combined vision system display on the display 18 based on one or more conditions associated with the aircraft 10. This ensures that the overlay of the synthetic vision system display and/or combined vision system display on the display 18 is displayed on the display 18 when it is most useful for the pilot and/or copilot, and reduces clutter on the display 18. For example, the vision display manager module 24 of the controller 22 disables the display of the overlay when the pilot and/or copilot's view out of the window of the aircraft 10 is sufficient to navigate the aircraft 10. In other instances when the pilot and/or copilot's view out of the window may be obstructed, due to weather, clouds, etc., the vision display manager module 24 of the controller 22 enables the overlay of the synthetic vision system display and/or combined vision system display on the display 18 to assist the pilot and/or copilot during the navigation of the aircraft 10. It should be noted that in the instance of the display 18 as a HUD, the overlay of the synthetic vision system display and/or combined vision system display on the display 18 involves enabling or disabling translucent graphical elements generated by the synthetic vision system display and/or combined vision system display of the display system 34. In addition, it should be noted that one or more of the blocks illustrated in the method may be optional, as the vision display manager module 24 of the controller 22 may enable or disable the overlay of the synthetic vision system display and/or combined vision system display on the display 18 based on any set of predefined conditions. Further, it should be noted that while the systems and methods described herein refer to disabling the overlay of the synthetic vision system display and/or combined vision system display on the display 18, in other embodiments, the overlay of the synthetic vision system display and/or combined vision system display on the display 18 may have a reduced brightness level such that the overlay is not prominent on the display 18.

Accordingly, the system and method described herein assists the pilot and/or co-pilot of the aircraft 10 in performing the task of flying or navigating the aircraft 10 more accurately or efficiently by reducing clutter on the display 18, which reduces the workload on the pilot and/or co-pilot. Moreover, the system and method described herein assists the pilot and/or co-pilot of the aircraft 10 in performing the task of flying or navigating the aircraft 10 more accurately or efficiently by automatically enabling the display of the overlay of the combined vision system display and/or the synthetic vision system display based on conditions associated with the aircraft 10.

It should be noted that in certain embodiments, with reference to FIG. 2, the overlay of the synthetic vision system display and/or combined vision system display on the display 18 may be provided over the portion of the display 18 that is determined to be obscured. For example, based on the processing of the IR camera data 148, the display manager system 100 may determine which portion of the IR camera data 148 is obscured, and based on the determination, the display manager system 100 may command the display system 34 to display the overlay over the portion of the view that is obstructed. As a further example, based on the processing of the camera data 154, the display manager system 100 may determine which portion of the camera data 154 is obscured, and based on the determination, the display manager system 100 may command the display system 34 to display the overlay over the portion of the view that is obstructed. Thus, in this example, the overlay is enabled over the portion of the display 18 that is obstructed, which reduces clutter on the unobstructed portion of the window. In other examples, based on the attitude sensor data 136, the display manager system 100 may command the display system 34 to display the overlay over the portion of the display 18 that is aligned with the terrain or ground, and not over the portion of the display 18 that is orientated toward the sky. Thus, in these examples, a subset of the translucent graphical elements associated with the overlay may be rendered on the display 18, while a remainder of the translucent graphical elements are altered so as to not appear on the display 18.

In various embodiments, provided is a computing device for presenting flight data, combined vision data, and synthetic vision data, onboard an aircraft. The computing device includes a system memory element and a communication device configured to establish communication connections to an infrared (IR) camera onboard the aircraft and avionics devices comprising at least a Flight Management System (FMS) and an onboard weather radar system, and to receive IR camera data and current visual condition data via the communication connections. The computing device includes a display device configured to present translucent graphical elements as part of a vision system onboard the aircraft. The display device includes at least one of a synthetic vision system (SVS), a combined vision system (CVS), and a Near-to-Eye (NTE) display, and the vision system comprises a Head-Up Display (HUD). The computing device includes at least one processor communicatively coupled to the system memory element and the display device. The at least one processor is configured to: present a display of the translucent graphical elements, via the display device; obtain current visual condition data associated with current conditions onboard the aircraft, via the communication device, wherein the current visual condition data comprises at least infrared (IR) camera data, a current flight plan, map data associated with the current flight plan, weather data associated with the current flight plan, a current time, and a current aircraft position; determine whether one of the current conditions indicates altering the display of the translucent graphical elements, by: perform image processing using the camera data to detect landscape features including aircraft surroundings in an IR camera point of view; analyze the map data to identify expected landscape feature data; perform a comparison to determine whether the landscape features detected by the image processing match a set of expected landscape features from the expected landscape feature data; and when the landscape features detected by the image processing do not include a set of expected landscape features or indicate excessive clutter, based on the comparison, determine that the camera data indicates altering the display of the translucent graphical elements; identify current weather conditions, based on the current flight plan, the weather data, and the current aircraft position; and when the current weather conditions comprise a high level of visibility, determining that the current weather conditions indicate altering the display of the translucent graphical elements; identify a proximity of the aircraft to ground, based on the current aircraft position; and when the proximity of the aircraft to the ground is not within a first predefined threshold, determining that the proximity of the aircraft to the ground indicates altering the display of the translucent graphical elements; identify a current attitude of the aircraft, based on the current aircraft position; and when the current attitude of the aircraft indicates a camera field of view directed into sky, determining that the current attitude indicates altering the display of the translucent graphical elements; identify a current daylight state based on the current time and the current aircraft position; and when the current daylight state indicates daylight hours, determining that the current daylight state indicates altering the display of the translucent graphical elements; when one of the current conditions indicates altering the display of the translucent graphical elements, identify a subset of the translucent graphical elements applicable to the one of the current conditions; and alter the display of the translucent graphical elements based on the current visual condition data, via the display device, wherein altering the display includes at least one of: reducing a brightness level of the subset of the translucent graphical elements, and deactivating and removing the subset of the translucent graphical elements; and when a plurality of the current conditions indicates altering the display of the translucent graphical elements, identify a second subset of the translucent graphical elements applicable to the plurality of the current conditions; and alter the display of the translucent graphical elements based on the current visual condition data, via the display device, wherein altering the display includes at least one of: increasing the brightness level of the second subset of the translucent graphical elements, and activating and adding the second subset of the translucent graphical elements.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A method for managing an overlay of a vision system display on a display associated with a vehicle, comprising:
receiving, by a processor, a ground position of the vehicle that indicates a proximity of the vehicle to ground;
determining, by the processor, the ground position of the vehicle is below a proximity threshold;
based on the determining the ground position of the vehicle is below the proximity threshold, receiving, by the processor, an attitude of the vehicle;
determining, by the processor, the attitude of the vehicle within an attitude threshold;
based on the determining the attitude of the vehicle within the attitude threshold, receiving, by the processor, image data from a camera coupled to the vehicle;
determining, by the processor, based on the image data that the image data is unobscured; and
outputting, by the processor, a disable command to control the display to disable the rendering of the overlay of the vision system display on the display.

2. The method of Claim 1, wherein based on the determining the attitude of the vehicle is within the attitude threshold, the method further comprises:
receiving, by the processor, weather data associated with an environment of the vehicle;
receiving, by the processor, an amount of ambient light observed in an environment external to the vehicle; and
determining, by the processor, based on the weather data and the amount of ambient light to enable the display of the overlay of the vision system display on the display.

3. The method of Claim 2, wherein the receiving, by the processor, the image data from the camera coupled to the vehicle is based on the determining, based on the weather data and the amount of ambient light, to enable the display of the overlay.

4. The method of Claim 2, further comprising:
determining, by the processor, based on the weather data and the amount of ambient light, to disable the display of the overlay of the vision system display on the display; and
outputting, by the processor, the disable command.

5. The method of Claim 1, wherein based on the determining the attitude of the vehicle is below the attitude threshold, the method further comprises:
receiving, by the processor, infrared image data from an infrared camera coupled to the vehicle;
receiving, by the processor, a position of the vehicle;
retrieving, by the processor, at least one object expected in the infrared image data from a datastore associated with the vehicle based on the position of the vehicle;
determining, based on the infrared image data and the at least one object, that the infrared image data contains the at least one object; and
determining, by the processor, based on the infrared image data containing the at least one object, to enable the display of the overlay of the vision system display on the display.

6. The method of Claim 5, wherein the receiving, by the processor, the image data from the camera coupled to the vehicle is based on the determining, based on the infrared image data containing the at least one object, to enable the display of the overlay.

7. The method of Claim 1, further comprising:
prior to the receiving, by the processor, the ground position of the vehicle, determining, by the processor, an elapsed time exceeds a time threshold.

8. The method of Claim 1, wherein the receiving, by the processor, the image data from the camera coupled to the vehicle further comprises:
determining, by the processor, based on the image data, that the image data is at least partially obscured; and
outputting, by the processor, an enable command to control the display to render the overlay of the vision system display on the display.

9. The method of Claim 1, further comprising:
determining, by the processor, the ground position of the vehicle is greater than the proximity threshold; and
based on the determining the ground position is greater than the proximity threshold, outputting, by the processor, the disable command.

10. The method of Claim 1, further comprising:
determining, by the processor, the attitude of the vehicle is outside of the attitude threshold; and
based on the determining the attitude is outside of the attitude threshold, outputting, by the processor, the disable command.

11. A system for managing an overlay of a vision system display on a display associated with a vehicle, comprising:
at least one source of a ground position of the vehicle that indicates a proximity of the vehicle to ground and an attitude of the vehicle;
a camera coupled to the vehicle that captures image data of an environment associated with the vehicle;
the display;
a controller in communication with the display, the at least one source and the camera, and the controller has a processor configured to:
receive the ground position of the vehicle, the attitude of the vehicle and the image data;
determine, based on the ground position of the vehicle, that the ground position of the vehicle is below a proximity threshold;
based on the determination that the ground position is below the proximity threshold, determine, based on the attitude of the vehicle, the attitude of the vehicle is within an attitude threshold;
determine that the image data is unobscured; and
based on the determination that the image data is unobscured, output a disable command to control the display to disable the rendering of the overlay of the vision system display on the display.

12. The system of Claim 11, further comprising:
at least one second source of weather data associated with an environment of the vehicle;
a light sensor that observes an amount of ambient light in an environment external to the vehicle and generates sensor signals based thereon; and
wherein the controller is configured to determine, based on the weather data and the sensor signals, to output the disable command.

13. The system of Claim 11, further comprising an infrared camera coupled to the vehicle, and wherein the processor of the controller is configured to:
receive infrared image data from the infrared camera;
receive a position of the vehicle from a navigation system associated with the vehicle;
retrieve at least one object expected in the infrared image data from a datastore associated with the vehicle based on the position of the vehicle;
determine, based on the infrared image data and the at least one object, that the infrared image data contains the at least one object; and
determine, based on the infrared image data containing the at least one object, to enable the display to render the display of the overlay of the vision system display on the display.

14. The system of Claim 11, wherein the processor of the controller is further configured to:
determine based on the image data, that the image data is at least partially obscured;
based on the determination that the image data is at least partially obscured, output an enable command to control the display to render the overlay of the vision system display on the display;
determine that the ground position of the vehicle is greater than the proximity threshold;
based on the determination that the ground position is greater than the proximity threshold, output the disable command;
determine that the attitude of the vehicle is outside of the attitude threshold; and
based on the determination that the attitude is outside of the attitude threshold, output the disable command.

15. The system of Claim 11, wherein the display is a head up display, and the overlay includes translucent synthetic vision images or the translucent synthetic vision images and translucent enhanced flight vision images.
